(19) Europäisches Patentamt
European Patent Office
Office européen des brevets

(11) **EP 1 485 588 B1**

(12) **EUROPEAN PATENT SPECIFICATION**

(45) Date of publication and mention
of the grant of the patent:
**27.07.2005 Bulletin 2005/30**

(51) Int Cl.⁷: **F01N 3/023**

(21) Application number: **03712370.0**

(22) Date of filing: **19.03.2003**

(86) International application number:
**PCT/GB2003/001165**

(87) International publication number:
**WO 2003/081000 (02.10.2003 Gazette 2003/40)**

(54) **EXHAUST SYSTEM FOR AN INTERNAL COMBUSTION ENGINE**

ABGASSYSTEM FÜR EINE BRENNKRAFTMASCHINE

SYSTEME D'ECHAPPEMENT POUR MOTEUR A COMBUSTION INTERNE

(84) Designated Contracting States:
**AT BE BG CH CY CZ DE DK EE ES FI FR GB GR HU IE IT LI LU MC NL PT RO SE SI SK TR**

(30) Priority: **21.03.2002 GB 0206613**

(43) Date of publication of application:
**15.12.2004 Bulletin 2004/51**

(73) Proprietor: **JOHNSON MATTHEY PUBLIC LIMITED COMPANY**
**London SW1Y 5BQ (GB)**

(72) Inventors:
• **ALLANSSON, Ronny**
  **S-434 96 Kungsbacka (SE)**
• **LAVENIUS, Mats, Ragnar, Frederik**
  **S-433 30 Partille (SE)**
• **Walker, Andrew Peter**
  **Royston SG8 6HG (GB)**

(74) Representative: **Nunn, Andrew Dominic**
**Johnson Matthey Technology Centre,**
**Blount's Court,**
**Sonning Common**
**Reading RG4 9NH (GB)**

(56) References cited:
**EP-A- 0 341 832**     **EP-A- 0 766 993**
**EP-A- 1 217 196**     **DE-A- 19 926 138**
**JP-A- 2001 073 748**

**Description**

The present invention relates to measures for preventing or reducing nitrogen dioxide ($NO_2$) slip in an exhaust gas aftertreatment system for an internal combustion engine comprising a catalyst for oxidising nitrogen monoxide (NO) in the exhaust gas to $NO_2$ and at least one filter for particulate matter disposed downstream of the catalyst. In particular the invention relates to a system for actively regenerating the at least one filter.

EP-A-0341832 describes a process of combusting diesel soot trapped on a filter in $NO_2$ at temperatures of up to 400°C by oxidising NO in diesel exhaust gas to $NO_2$ over an oxidation catalyst disposed upstream of the filter. A device embodying this process is marketed by Johnson Matthey as the CRT®.

A problem with the process in use is that the rates of NO oxidation and soot combustion in $NO_2$ are relatively low at lower exhaust gas temperatures encountered in certain situations. These situations can include periods of idling and slow driving in traffic. It is therefore desirable to raise the temperature of the CRT® device during periods of lower exhaust gas temperatures to increase the combustion of trapped soot, levels of which would otherwise gradually increase. Raising the temperature of the CRT® device to aid in the combustion of trapped soot is known as "active regeneration".

A number of modes of increasing the temperature of components of an exhaust gas aftertreatment system are known. Non-limiting examples of these include employing an electrically heated catalyst, introducing unburnt hydrocarbon into an exhaust gas to create an exotherm as the hydrocarbon is combusted over a catalyst in the system and secondary injection of air into the system to aid combustion of unburnt hydrocarbon. However, there are problems associated with these known methods, including increased fuel penalty and the requirement for complicated and expensive hardware and control means.

We have investigated ways of actively regenerating a CRT® device and have now found that the efficiency of the CRT® process can be improved by selectively increasing the back-pressure in the exhaust system. We believe that this is for at least two reasons. Firstly, increasing the back-pressure in the system can result in an increase in the exhaust gas temperature as the engine is made to work harder. This increase in the exhaust gas temperature can promote the combustion of soot on the filter in $NO_2$.

Secondly, the increase in exhaust gas temperature can thermodynamically promote the oxidation of NO to $NO_2$. This in turn can increase the rate of combustion of soot on the filter in $NO_2$.

We believe that the method of the invention can also be used to actively regenerate all forms of catalysed and non-catalysed particulate filters in exhaust gas aftertreatment systems, and for all internal combustion engines employing the CRT® process.

According to one aspect, the invention provides an exhaust gas aftertreatment system for an internal combustion engine, comprising a conduit for carrying a flowing exhaust gas, at least one filter for particulate matter, an oxidation catalyst for oxidising NO to $NO_2$, which catalyst is disposed upstream of the at least one filter, means for limiting flow of an exhaust gas in the conduit thereby to increase back-pressure in the system, which flow limiting means comprising a cut-off valve disposed in the conduit, a sensor for detecting an amount of $NO_2$ in exhaust gas downstream of the filter, and control means arranged selectively to operate the flow limiting means when the amount of $NO_2$ detected in the exhaust gas is at or above a pre-determined value, thereby to increase the temperature in the system and consequently to increase the rate of reaction between $NO_2$ and particulate matter.

In one embodiment the flow limiting means can substantially prevent flow of exhaust gas in the system.

The cut off valve can be positioned in any suitable position depending e.g. on space; and/or prevention of heat loss in the system for combusting soot and/or oxidising NO. In certain embodiments, the valve can be disposed upstream of the NO oxidation catalyst; downstream of the filter; or between the filter and the NO oxidation catalyst.

At its simplest, the invention provides a switch for operating the means for increasing the back-pressure, e. g. in response to a warning light on a vehicle dashboard, and the switch is operated by the driver. Operating the flow limiting means increases back-pressure in the system. Increasing back-pressure in the system generally results in an increase in the temperature of the filter. In turn this can raise the rate of combustion in oxygen or $NO_2$ of particulate matter trapped on the at least one filter. Increasing the exhaust gas temperature can thermodynamically increase the rate of NO oxidation over the catalyst.

In an illustrative embodiment, the control means can be arranged selectively to operate the flow limiting means during engine idling.

In a further embodiment, the control means is arranged selectively to operate the flow limiting means when the detected temperature of the or each filter and/or exhaust gas e.g. using a thermocouple or infra-red sensor, is at up to 400°C.

In a further embodiment, the system includes a sensor for sensing back-pressure in the system as an indication of particulate matter loading on the at least one filter wherein the control means also operates the flow limiting means when the detected particulate matter loading on the or each filter exceeds a pre-determined value. This can be detected, for example, using the back-pressure in the system. Alternatively, the flow limiting means can be operated in response to a detected condition in an engine map of accelerator position or elapsed time, in addition to when $NO_2$ slip is detected. In an illustrative embodiment, however, the means for increasing the back-pressure is deployed only when the engine is at idle, since deployment during driving can cause driveability problems and can also give very high engine out smoke levels.

In a further aspect, the means for limiting exhaust gas flow is an engine brake. It is common practice as a safety feature and to improve fuel efficiency for a vehicle to include an engine brake whereby lifting off from the accelerator pedal during driving leads to fuel cut-off. Such known engine brakes can include US-A-4,149,618. Where the present invention utilises an engine brake which is ordinarily used on a certain vehicle, it may be unnecessary to provide new, potentially complicated and expensive hardware to adopt the invention. Instead it may be possible to integrate the invention into an existing vehicle by simple reprogramming of the engine brake control means, e.g. engine management unit including an electronic control unit (ECU) or computer chip.

The at least one filter need not be catalysed, but in embodiments according to the invention it can include any catalyst capable of catalysing combustion of particulate matter in oxygen or $NO_2$. For example, in one illustrative embodiment, the or each filter may comprise at least one platinum group metal, such as platinum, palladium, rhodium, ruthenium or iridium. Alternatively, a mixed caesium/lanthanum/vanadium pentoxide catalyst can be used.

Application of the present invention to the CRT® is particularly advantageous for at least three reasons. Firstly, an increase in back-pressure in the system causes an increase in the temperature of the system as a whole, thereby increasing the rate of NO oxidation over the catalyst. Thus, more $NO_2$ is available to combust the trapped particulate matter. Secondly, increased filter temperature leads to an increase in the rate of reaction between $NO_2$ and trapped particulate matter. Thirdly, it causes engine-out NOx levels to increase thereby also increasing the NOx available for oxidation to combust trapped particulate matter.

The exhaust system of the present invention can be applied to any internal combustion engines. For example, the engine can be a lean burn engine such as a lean burn gasoline engine e.g. a gasoline direct injection (GDI) engine, or a diesel engine. Where the engine is a diesel engine, in an illustrative embodiment it is a heavy-duty diesel engine according to the relevant EU, US Federal or Californian legislation. For example, the present invention has particular utility in heavy-duty diesel vehicles operating in built up areas and city centres and involving frequent idling and stop-start driving. Examples of such uses include mass transit vehicles such as buses and refuse trucks.

According to a further aspect, the invention provides a method of controlling $NO_2$ slip above a pre-determined value downstream of at least one filter for particulate matter in an exhaust gas aftertreatment system of an internal combustion engine, comprising the steps of collecting particulate matter from the exhaust gas on at least one filter, catalytically oxidising NO to $NO_2$, combusting particulate matter on the filter in the $NO_2$, detecting the amount of $NO_2$ downstream of the filter and selectively limiting the flow of the exhaust gas in the system with a flow limiting means comprising a cut-off valve thereby to increase the temperature in the system and consequently to increase the rate of reaction between $NO_2$ and particulate matter when the amount of $NO_2$ detected is at or above a pre-determined value.

The method of the present invention is for controlling $NO_2$ slip in an exhaust system. $NO_2$ is an irritant to mucous membranes, e.g. eyes, nose and respiratory passages, and its release into the atmosphere is undesirable. The present invention is used to reduce the level of $NO_2$ released into the atmosphere by increasing the back-pressure in the system when values of $NO_2$ detected downstream of a filter disposed in the exhaust system are equal to or exceed a pre-determined value. Increasing the back-pressure in the system results in an increase in the temperature of the filter, which in turn improves the rate of reaction between $NO_2$ and particulate matter over the filter. Thus $NO_2$ slip is reduced by increasing the rate of reacfions that remove it

In order that the invention may be more fully understood, the following Example is provided by way of illustration only and by reference to the accompanying drawings, in which:

Figure 1 is a trace of temperature (°C) and engine speed (rpm) against time (seconds) showing the effect of increasing the back-pressure in an exhaust system on temperatures within a CRT® system;

Figure 2 is a trace of $NO_2$ (ppm), temperature (°C) and engine speed (rpm) against time (seconds) showing the effect of increasing the back-pressure in an exhaust system on the efficiency of $NO_2$ generation and $NO_2$ usage within the CRT® system; and

Figure 3 is a trace of $NO_2$ used (ppm) and engine speed (rpm) against time (seconds) showing the effect of increasing the back-pressure in an exhaust system on the amount of $NO_2$ used within the CRT® system.

## EXAMPLE

The effect of increasing the back-pressure in an exhaust system to regenerate a particulate matter filter according to the invention has been demonstrated on an engine bench using a 12-litre turbocharged, intercooled engine.

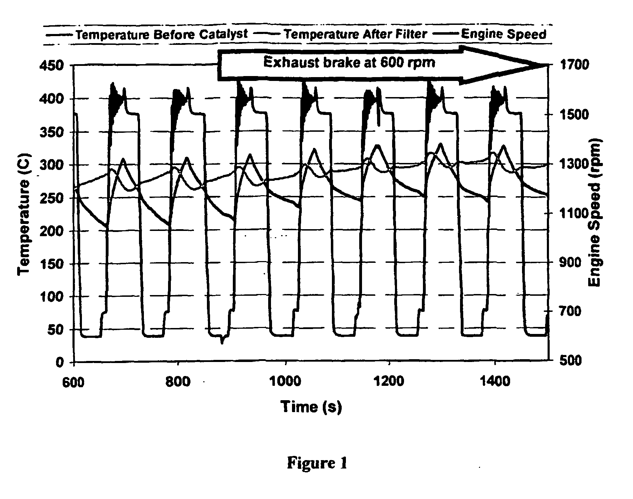

The exhaust system included a CRT® unit as described in EP-A-0341832. The engine was run to simulate e.g. a city centre bus driving cycle, involving driving between bus stops, punctuated by periods of engine idle at the bus stops. It is preferable to deploy the engine brake only when the bus is at idle, since deployment while the bus is moving could lead to driveability issues. The cycle involved high-speed (1600 rpm) engine conditions, corresponding to driving between bus stops, and low speed (600 rpm) corresponding to engine idling at the bus stops. As stated above, the engine brake was only deployed at the 600 rpm engine condition. Figure 1 shows the effect of deploying the engine brake under idle conditions (e.g. when the bus has stopped to pick up passengers) on the temperatures within the system. It can be seen that the temperature at the inlet to the catalyst of the CRT® system increases as a result of the application of the engine brake. The peak temperature during the cycle increases from 310°C to 330°C when the brake is deployed. Similarly, the temperature downstream of the filter increases; the peak temperature increases from 295°C to 315°C upon engine brake application. This 20°C increase in temperature can significantly enhance the operation of the CRT® system.

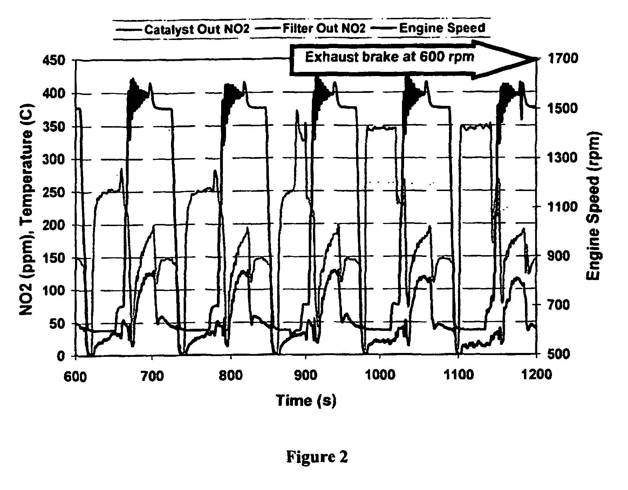

As Figure 2 shows, the amount of $NO_2$ generated by the catalyst increases when the engine brake is applied. This is particularly apparent at the idle condition, where the amount of $NO_2$ generated increases from 250 ppm to 350 ppm when the engine brake is deployed. (Note that the engine-out NOx level increased from 350 ppm to 400 ppm when the engine brake was deployed; this NOx is predominantly in the form of NO. Therefore, the efficiency of the conversion of engine-out NO into $NO_2$ under the idle condition increased from 71% to 88% when the engine brake was deployed, due to the increase in catalyst temperature referred to above). Figure 2 also shows that the extra $NO_2$ generated under this condition reacts with carbon in the filter, since there is no increase in the $NO_2$ downstream of the filter. Indeed, the amount of $NO_2$ downstream of the filter is actually *decreased* when the engine brake is applied, demonstrating that the increase in temperature associated with the application of the engine brake is leading to a significant increase in the rate of reaction between $NO_2$ and the carbon in the filter. That is, there is a demonstrable increase in the amount of $NO_2$ consumed within the filter when the engine brake is applied, since there is an *increase* in the amount of $NO_2$ entering the filter, but a *decrease* in the amount of $NO_2$ leaving the filter. Therefore, this engine brake strategy can also be used to minimise $NO_2$ slip.

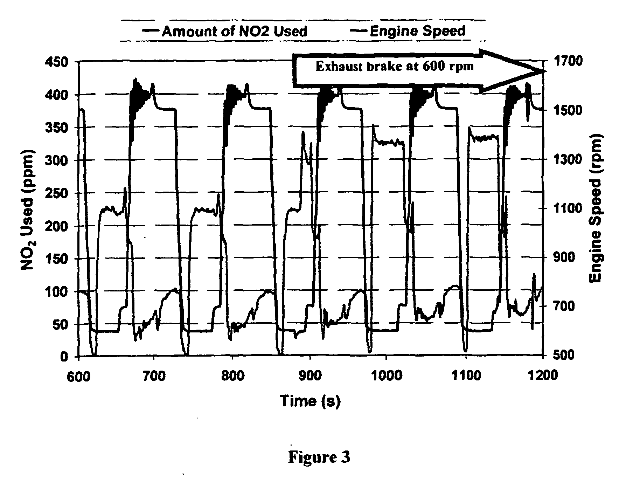

This is shown more clearly in Figure 3, which shows the effect of engine brake deployment on the amount of $NO_2$ used within the filter (to react with carbon). The amount of $NO_2$ used in the filter is defined as follows:

$$NO_2 \text{ Used} = NO_2 \text{ Entering the Filter} - NO_2 \text{ Leaving the Filter}$$

Therefore, it can be seen that the deployment of the engine brake leads to an increase in the temperature of the catalyst and filter within the CRT® system. This leads to an increase in the amount of $NO_2$ generated over the catalyst, and to an increase in the amount of $NO_2$ consumed by reaction with carbon within the filter. The deployment of the engine brake is therefore seen to be an effective active regeneration strategy for filter-based systems such as the CRT®.

**Claims**

1. An exhaust gas aftertreatment system for an internal combustion engine, comprising a conduit for carrying a flowing exhaust gas, at least one filter for particulate matter, an oxidation catalyst for oxidising NO to $NO_2$, which catalyst is disposed upstream of the at least one filter, **characterised by** means for limiting flow of an exhaust gas in the conduit thereby to increase back-pressure in the system, which flow limiting means comprising a cut-off valve disposed in the conduit, a sensor for detecting an amount of $NO_2$ in exhaust gas downstream of the filter, and control means arranged selectively to operate the flow limiting means when the amount of $NO_2$ detected in the exhaust gas is at or above a pre-determined value, thereby to increase the temperature in the system and consequently to increase the rate of reaction between $NO_2$ and particulate matter.

2. An exhaust system according to claim 1, wherein the flow limiting means, when operated, substantially prevents exhaust gas flow in the conduit.

3. An exhaust system according to claim 1 or 2, wherein the cut-off valve is disposed at one of the following locations: downstream of the filter; upstream of the NO oxidation catalyst; and between the NO oxidation catalyst and the filter.

4. An exhaust system according to claim 1, 2 or 3, wherein the control means operates the flow limiting means during engine idling.

5. An exhaust system according to any preceding claim, wherein the control means operates the flow limiting means when the temperature of the filter and/or exhaust gas is at up to 400°C.

6. An exhaust system according to any preceding claim, including a sensor for sensing back-pressure in the system as an indication of particulate matter loading on the at least one filter, wherein the control means also operates the flow limiting means when the detected back-pressure in the system is at or above a pre-determined value.

7. An exhaust system according to any preceding claim, wherein the cut-off valve comprises an engine brake.

8. An exhaust system according to any preceding claim, wherein the or each filter is catalysed, optionally with at least one platinum group metal.

9. An apparatus including an internal combustion engine, optionally a lean burn engine such as a heavy duty diesel engine, and an exhaust system according to any preceding claim.

10. A method of controlling $NO_2$ slip above a pre-determined value downstream of at least one filter for particulate matter in an exhaust gas aftertreatment system of an internal combustion engine, comprising the steps of collecting particulate matter from the exhaust gas on at least one filter, catalytically oxidising NO to $NO_2$, combusting particulate matter on the filter in the $NO_2$, detecting the amount of $NO_2$ downstream of the filter and selectively limiting the flow of the exhaust gas in the system with a flow limiting means comprising a cut-off valve thereby to increase the temperature in the system and consequently to increase the rate of reaction between $NO_2$ and particulate matter when the amount of $NO_2$ detected is at or above a pre-determined value.

**Patentansprüche**

1. Abgasnachbehandlungssystem für einen Verbrennungsmotor, umfassend ein Rohr für den Transport eines strömenden Abgases, mindestens einen Filter für Feststoffe, einen Oxidationskatalysator zur Oxidation von NO zu $NO_2$, wobei der Katalysator stromaufwärts von dem mindestens einen Filter angeordnet ist, **gekennzeichnet durch** eine Einrichtung zur Begrenzung des Stroms von Abgas in das Rohr, um **dadurch** einen Gegendruck in dem System zu erhöhen, wobei die den Strom begrenzende Einrichtung ein In dem Rohr angeordnetes Abschlussventil, einen Sensor zur Detektion einer Menge von $NO_2$ In Abgas stromabwärts von dem Filter und eine Steuerungseinrichtung, die selektiv angeordnet ist, um die den Strom begrenzende Einrichtung zu betätigen, wenn die Menge des in dem Abgas detektierten $NO_2$ bei oder oberhalb eines vorher bestimmten Werts liegt, umfasst, um **dadurch** die Temperatur in dem System und demzufolge die Geschwindigkeit der Umsetzung zwischen $NO_2$ und den Feststoffen zu erhöhen.

2. Abgassystem nach Anspruch 1, wobei die den Strom begrenzende Einrichtung, wenn sie betätigt wird, im Wesentlichen einen Abgasstrom in das Rohr verhindert.

3. Abgassystem nach Anspruch 1 oder 2, wobei das Abschlussventil an einem der folgenden Orte vorgesehen ist: stromabwärts von dem Filter; stromaufwärts von dem NO-Oxidationskatalysator und zwischen dem NO-Oxidationskatalysator und dem Filter.

4. Abgassystem nach Anspruch 1, 2 oder 3, wobei die Steuerungseinrichtung die den Strom begrenzende Einrichtung während eines Motorleerlaufs betätigt.

5. Abgassystem nach einem beliebigen vorstehenden Anspruch, wobei die Steuerungseinrichtung die den Strom begrenzende Einrichtung betätigt, wenn die Temperatur des Filter und/oder des Abgases bei bis zu 400°C liegt.

6. Abgassystem nach einem beliebigen vorstehenden Anspruch, das einen Sensor einschließt zum Abtasten eines Gegendrucks In dem System als Hinweis auf eine Feststoffbeladung an dem mindestens einen Filter, wobei die Steuerungseinrichtung auch die den Strom begrenzende Einrichtung betätigt, wenn der detektierte Gegendruck in dem System bei oder oberhalb eines vorbestimmten Werts liegt.

7. Abgassystem nach einem beliebigen vorstehenden Anspruch, wobei das Abschlussventil eine Motorbremse umfasst.

**8.** Abgassystem nach einem beliebigen vorstehenden Anspruch, wobei der oder jeder Filter katalysiert wird, gegebenenfalls mit mindestens einem Platingruppenmetall.

**9.** Vorrichtung, die einen Verbrennungsmotor einschließt, gegebenenfalls einen Magerverbrennungsmotor, wie einen Schwerlastdieselmotor oder Dieselmotor für erschwerte Einsatzbedingungen, und ein Abgassystem nach einem beliebigen vorstehenden Anspruch.

**10.** Verfahren zur Steuerung eines $NO_2$-Schlupfs oberhalb eines vorbestimmten Werts stromabwärts von mindestens einem Filter für Feststoffe in einem Abgasnachbehandlungssystem eines Verbrennungsmotors, umfassend die Stufen eines Sammelns von Feststoffen aus dem Abgas auf mindestens einem Filter, katalytische Oxidation von NO zu $NO_2$, Verbrennung von Feststoffen auf dem Filter In dem $NO_2$, Detektion der Menge von $NO_2$ stromabwärts von dem Filter und selektives Begrenzen des Stroms des Abgases in dem System mit einer den Strom begrenzenden Einrichtung, die ein Abschlussventil umfasst, um **dadurch** die Temperatur In dem System und demzufolge die Geschwindigkeit der Umsetzung zwischen $NO_2$ und Feststoffen zu erhöhen, wenn die Menge an detektiertem $NO_2$ bei oder oberhalb eines vorbestimmten Werts liegt.

## Revendications

**1.** Système de post-traitement de gaz d'échappement pour un moteur à combustion interne, comprenant un conduit pour transporter un gaz d'échappement d'écoulement, au moins un filtre pour des particules, un catalyseur d'oxydation pour oxyder le NO en $NO_2$, lequel catalyseur est agencé en amont du au moins un filtre, **caractérisé par** des moyens pour limiter l'écoulement d'un gaz d'échappement dans le conduit afin d'augmenter ainsi la contre pression dans le système, lesquels moyens de limitation de l'écoulement comprenant une soupape de fermeture agencée dans le conduit, un capteur permettant de détecter une quantité de $NO_2$ dans le gaz d'échappement en aval du filtre, et des moyens de commande agencés de manière sélective pour actionner les moyens de limitation de l'écoulement lorsque la quantité de $NO_2$ détectée dans le gaz d'échappement est égale ou supérieure à une valeur prédéterminée, afin d'augmenter ainsi la température dans le système et par conséquent afin d'augmenter le taux de réaction entre le $NO_2$ et les particules.

**2.** Système d'échappement selon la revendication 1, dans lequel les moyens de limitation de l'écoulement, lorsqu'ils sont actionnés, empêchent sensiblement l'écoulement du gaz d'échappement dans le conduit.

**3.** Système d'échappement selon la revendication 1 ou 2, dans lequel la soupape de fermeture est agencée au niveau de l'un des emplacements suivants : en aval du filtre ; en amont du catalyseur d'oxydation de NO ; et entre le catalyseur d'oxydation de NO et le filtre.

**4.** Système d'échappement selon la revendication 1, 2 ou 3, dans lequel les moyens de commande actionnent les moyens de limitation de l'écoulement pendant que le moteur est au ralenti.

**5.** Système d'échappement selon l'une quelconque des revendications précédentes, dans lequel les moyens de commande actionnent les moyens de limitation de l'écoulement lorsque la température du filtre et/ou du gaz d'échappement s'élève jusqu'à 400°C.

**6.** Système d'échappement selon l'une quelconque des revendications précédentes, comprenant un capteur pour capter la contre-pression dans le système en tant qu'indication de la charge de particules sur le au moins un filtre, dans lequel les moyens de commande actionnent également les moyens de limitation de l'écoulement lorsque la contre-pression détectée dans le système est égale ou supérieure à une valeur prédéterminée.

**7.** Système d'échappement selon l'une quelconque des revendications précédentes, dans lequel la soupape de fermeture comprend un frein moteur.

**8.** Système d'échappement selon l'une quelconque des revendications précédentes, dans lequel le ou chaque filtre est catalysé, optionnellement avec au moins un métal du groupe du platine.

**9.** Appareil comprenant un moteur à combustion interne, en option un moteur à gaz pauvre tel qu'un moteur diesel pour les grosses cylindrées, et un système d'échappement selon l'une quelconque des revendications précédentes.

**10.** Procédé de commande du glissement de $NO_2$ au-dessus d'une valeur prédéterminée en aval d'au moins un filtre destiné aux particules dans un système de post-traitement des gaz d'échappement d'un moteur à combustion interne, comprenant les étapes de récupération des particules du gaz d'échappement sur au moins un filtre, l'oxydation catalytique du NO en $NO_2$, la combustion des particules sur le filtre dans le $NO_2$, la détection de la quantité de $NO_2$ en aval du filtre et la limitation sélective de l'écoulement de gaz d'échappement dans le système avec des moyens de limitation de l'écoulement comprenant une soupape de fermeture, afin d'augmenter ainsi la température dans le système et par conséquent afin d'augmenter le taux de réaction entre le $NO_2$ et les particules lorsque la quantité de $NO_2$ détectée est égale ou supérieure à une valeur prédéterminée.

Figure 1

**Figure 2**

Figure 3